# EUROPEAN PATENT APPLICATION

(11) **EP 4 807 831 A1**
(43) Date of publication of application: **16.09.2026**
(21) Application number: 25198603.0
(22) Date of filing: 28.08.2025
(51) Int. Cl.: H01M 10/04, H01M 10/0583, H01M 50/169, H01M 50/466, H01M 50/474, H01M 50/486

(54) **SECONDARY BATTERY AND METHOD OF MANUFACTURING THE SAME**

(30) Priority: 10.03.2025 KR 20250030817
(71) Applicant: SAMSUNG SDI CO., LTD., Yongin-si, Gyeonggi-do 17084 (KR)
(72) Inventor: PARK, Seeun, 17084 Gyeonggi-do, Yongin-si (KR); YONG, Junsun, 17084 Gyeonggi-do, Yongin-si (KR); BAE, Kwangsoo, 17084 Gyeonggi-do, Yongin-si (KR); LEE, Junhyung, 17084 Gyeonggi-do, Yongin-si (KR); KIM, Jihwan, 17084 Gyeonggi-do, Yongin-si (KR); LEE, Jungwoo, 17084 Gyeonggi-do, Yongin-si (KR); ROH, Heyoungcheoul, 17084 Gyeonggi-do, Yongin-si (KR); BAE, Chaeeun, 17084 Gyeonggi-do, Yongin-si (KR); KIM, Misol, 17084 Gyeonggi-do, Yongin-si (KR); YOON, Jihwan, 17084 Gyeonggi-do, Yongin-si (KR)
(74) Representative: Meissner Bolte Partnerschaft mbB

(57) **Abstract**

A secondary battery (10) includes a battery can (11) having a bottom portion (11c) and sidewall portions (11a) and open to an outside through an opening; an electrode assembly (20) having a stack structure of a positive electrode plate (23), a separator (21), and a negative electrode plate (24) and mounted inside the battery can (11); and a cap assembly fixed to the opening of the battery can (11) and connected to the electrode assembly, wherein a lower portion of the electrode assembly (20) includes a bottom fusion folding portion (21a), formed by heat-fusing and folding an edge of the separator (21), is in contact with the bottom portion (11c) of the battery can (11), and supports the electrode assembly (20).

## Description

### BACKGROUND

### 1. Field

Aspects of the present invention relate to a secondary battery and a method of manufacturing a secondary battery.

### 2. Discussion of Related Art

Batteries include primary batteries that cannot be charged and secondary batteries that can be charged or discharged. Large-capacity secondary batteries are widely used as power sources for driving motors in hybrid and electric vehicles and power storage batteries.

Such a secondary battery includes an electrode assembly, an outer material such as a battery can that accommodates the electrode assembly, and electrode terminals connected to the electrode assembly. The electrode assembly has a structure in which positive and negative electrode plates are separated from each other by a separator and stacked. However, in the electrode assembly, because the positive and negative electrode plates are not completely fixed to the separator, the positive and negative electrode plates may move slightly during a process of handling the electrode assembly. When the positive and negative electrode plates move, an alignment state is destroyed, which may cause a decrease in performance of a battery cell.

In the case of a top terminal-type secondary battery, when the weight of an electrode assembly increases, the electrode assembly may become biased or sag to one side in a battery can and may come into electrical contact with a bottom portion of the battery can, resulting in a short circuit. To solve such a problem, a bottom retainer that is a separate component is applied between a bottom of a battery can and an electrode assembly.

The above information disclosed in this Background section is for enhancement of understanding of the background of the present invention, and therefore, it may contain information that does not constitute a related (or prior) art.

### SUMMARY

Aspects of the present invention are directed to providing a secondary battery, which allows an alignment state of electrode plates to be maintained in a separator and the separator itself to perform a function of a retainer, thereby maintaining a stable attitude of an electrode assembly without use of a separate retainer, and a method of manufacturing a secondary battery.

According to the present invention, there is provided a secondary battery including: a battery can having a bottom portion and sidewall portions and open to an outside through an opening; an electrode assembly having a stack structure of a positive electrode plate, a separator, and a negative electrode plate and mounted inside the battery can; and a cap assembly fixed to the opening of the battery can and connected to the electrode assembly, wherein a lower portion of the electrode assembly includes a bottom fusion folding portion, formed by heat-fusing and folding an edge of the separator, is in contact with the bottom portion of the battery can, and supports the electrode assembly.

In some embodiment, a folding line of the bottom fusion folding portion is parallel to an end line of the positive electrode plate or the negative electrode plate.

In some embodiment, the electrode assembly further includes a folding maintenance portion configured to maintain a folded state of the bottom fusion folding portion.

In some embodiment, the folding maintenance portion includes a folding maintenance tape attached to the electrode assembly and covering the bottom fusion folding portion.

In some embodiment, the separator has a Z-folding structure repeatedly folded in a Z shape.

In some embodiment, a stacking maintenance portion is further provided at each of two side portions of the electrode assembly to maintain an alignment state of the electrode assembly.

In some embodiment, the stacking maintenance portion includes an adhesion tape attached to the two side portions of the electrode assembly.

In some embodiment, a press plate is further provided between the bottom fusion folding portion and the folding maintenance tape to press and support the bottom fusion folding portion.

In some embodiment, the press plate has a rectangular plate shape.

In some embodiment, a closed space is formed inside the press plate.

In some embodiment, a concavo-concave portion is formed on the press plate to prevent or reduce slippage of the press plate with respect to the bottom fusion folding portion.

In some embodiment, side fusion folding portions that are in contact with the sidewall portions of the battery can, and formed by heat-fusing and folding two side portions of the separator, are further formed at two side portions of the electrode assembly.

In some embodiment, the electrode assembly further includes a folding maintenance portion configured to maintain a folded state of the bottom fusion folding portion and the side fusion folding portions.

In some embodiment, the folding maintenance portion includes a folding maintenance tape attached to the electrode assembly and covering the bottom fusion folding portion and the side fusion folding portion,

According to the present invention, there is provided a method of manufacturing a secondary battery, the method including: a stacking operation of repeatedly stacking a positive electrode plate, a separator, and a negative electrode plate to form an electrode assembly; a heating, fusing, and folding operation of heating, fusing, and folding the separator at a lower edge of the electrode assembly to form a bottom fusion folding portion; a cap assembly welding operation of connecting a cap assembly to the electrode assembly on which the heating, fusing, and folding operation has been completed; an insert operation of inserting the electrode assembly, to which the cap assembly is welded, into a battery can; and a can welding operation of fixing the cap assembly to the battery can after the insert operation is completed.

In some embodiment, the method further includes, after the heating, fusing, and folding operation is completed, a taping operation of maintaining a folded state of the bottom fusion folding portion using a tape.

In some embodiment, the method further includes a press plate installation operation of mounting a press plate, which presses the bottom fusion folding portion, on the bottom fusion folding portion, wherein the press plate installation operation is a process performed between the heating, fusing, and folding operation and the taping operation.

In some embodiment, the press plate has a rectangular plate shape.

In some embodiment, a closed space is formed inside the press plate.

In some embodiment, a concavo-concave portion is formed on the press plate to prevent or reduce slippage of the press plate with respect to the bottom fusion folding portion.

Aspects and features of the present invention are not limited to those described above, and other aspects and features not specifically mentioned herein will be clearly understood by those skilled in the art from the description of the present invention below.

### BRIEF DESCRIPTION OF THE DRAWINGS

The following drawings attached to the present specification illustrate embodiments of the present invention and further describe aspects and features of the present invention together with the detailed description of the present invention. Thus, the present invention should not be construed as being limited to the drawings, in which:
FIG. 1 is a perspective view illustrating an exterior of a secondary battery according to some embodiments of the present invention;
FIG. 2 is a cross-sectional view of the secondary battery shown in FIG. 1, according to some embodiments of the present invention;
FIG. 3 is a view illustrating an electrode assembly applied to a secondary battery according to some embodiments of the present invention;
FIG. 4 is an enlarged view illustrating a fusion folding portion of FIG. 3, according to some embodiments of the present invention;
FIG. 5 is a flowchart for describing a method of manufacturing a secondary battery according to some embodiments of the present invention;
FIGS. 6 to 15 are views sequentially illustrating the method of manufacturing a secondary battery according to some embodiments of the present invention;
FIG. 16 is a view illustrating a modified example of an electrode assembly applicable to a secondary battery according to some embodiments of the present invention;
FIG. 17 is an enlarged view illustrating a bottom fusion folding portion shown in FIG. 16, according to some embodiments of the present invention;
FIGS. 18 and 19 are cross-sectional views illustrating other examples of a press plate shown in FIG. 17, according to some embodiments of the present invention;
FIG. 20 is a flowchart illustrating another example of a method of manufacturing a secondary battery according to some embodiments of the present invention;
FIGS. 21 and 22 illustrate still another example of a method of manufacturing a secondary battery according to some embodiments of the present invention;
FIG. 23 is a cross-sectional view illustrating another example of a secondary battery according to some embodiments of the present invention;
FIG. 24 illustrates a method of taping a bottom fusion folding portion and side fusion folding portions shown in FIG. 23, according to some embodiments of the present invention;
FIG. 25 is a perspective view of a secondary battery pack in which a secondary battery is embedded according to some embodiments of the present invention; and
FIG. 26 is a schematic view of a vehicle to which the secondary battery pack of FIG. 25 is applied, according to some embodiments of the present invention.

### DETAILED DESCRIPTION

Hereinafter, embodiments of the present invention will be described, in detail, with reference to the accompanying drawings. The terms or words used in the present specification and claims are not to be narrowly interpreted according to their general or dictionary meanings and should be interpreted as having meanings and concepts that are consistent with the technical idea of the present invention on the basis of the principle that an inventor can be his/her own lexicographer to appropriately define concepts of terms to describe his/her invention in the best way.

The embodiments described in this specification and the configurations shown in the drawings are only some embodiments of the present invention and do not represent all of the aspects, features, and embodiments of the present invention. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present invention relates to "one or more embodiments of the present invention." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present invention and is not intended to limit the present invention.

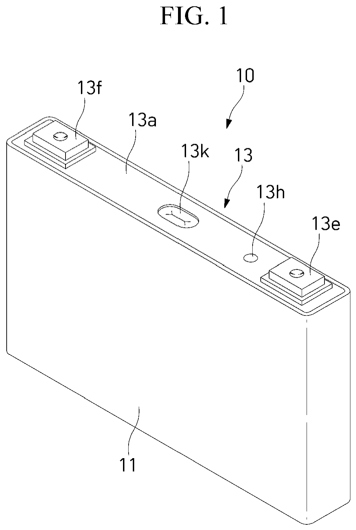

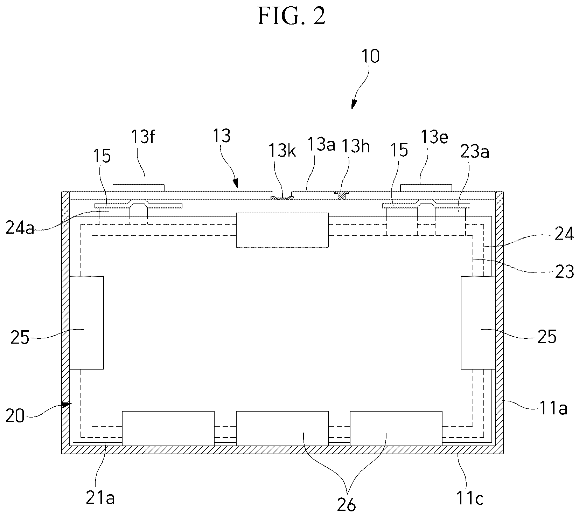

FIG. 1 is a perspective view illustrating an exterior of a secondary battery 10 according to some embodiments of the present invention. FIG. 2 is a cross-sectional view of the secondary battery shown in FIG. 1.

A battery can 11 may form the overall exterior of the secondary battery 10 and may be made of a conductive metal such as aluminum, an aluminum alloy, or nickel-plated steel. In addition, the battery can 11 may provide an internal space in which an electrode assembly is accommodated. The battery can 11 may include a bottom portion 11c and sidewall portions 11a and may be open upward through an opening. A cap assembly 13 may be welded and coupled to an upper opening of the battery can 11.

The cap assembly 13 may include a cap plate 13a that covers the opening of the battery can 11. In some embodiments, the battery can 11 and the cap plate 13a may be made of a conductive material. In addition, a first terminal 13e and a second terminal 13f may be disposed on the cap plate 13a. The first terminal 13e and the second terminal 13f may be electrically connected to negative and positive electrode tabs inside the battery can 11. The first and second terminals 13e and 13f may be exposed to the outside of the cap plate 13a. In a state of being welded to the opening of the battery can 11, the cap assembly 13 may be electrically connected to an electrode assembly 20 through a current collector 15.

An electrolyte injection port 13h and a gas vent portion 13k may be formed in the cap plate 13a. The electrolyte injection port 13h may provide a path for injecting an electrolyte. In addition, the gas vent portion 13k may be opened by gas generated inside the battery can 11 and may perform degassing.

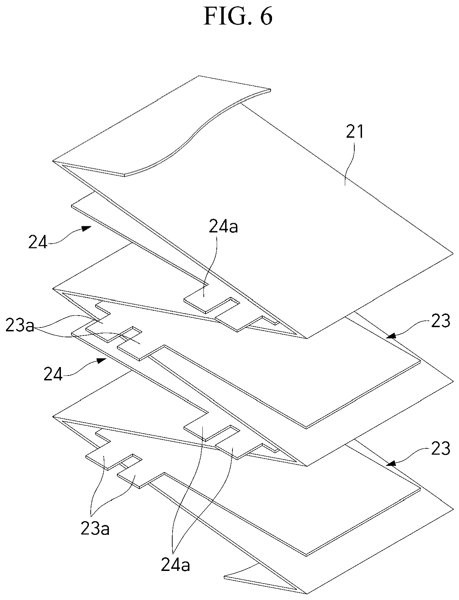

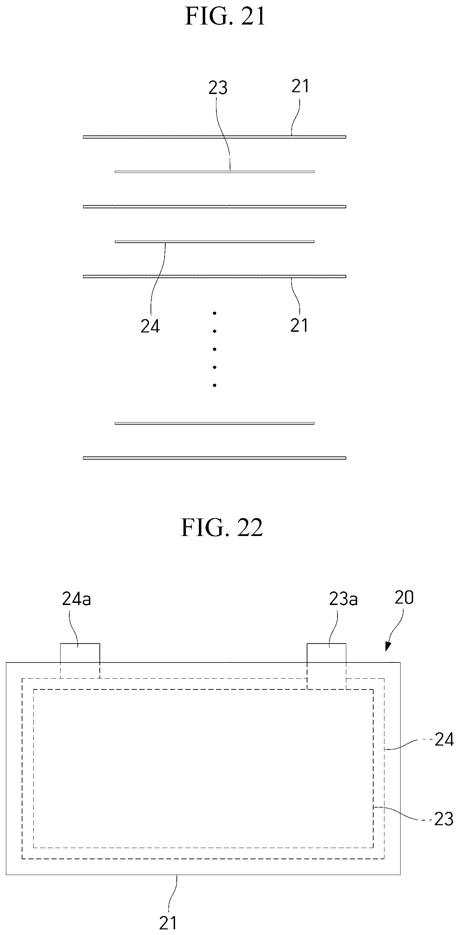

The electrode assembly 20 may be mounted inside the secondary battery 10. The electrode assembly 20 may be a stack including a positive electrode plate 23, a separator 21, and a negative electrode plate 24. The positive electrode plate 23 may be coated with a positive electrode active material, and the negative electrode plate 24 may be coated with a negative electrode active material. The electrode assembly 20 may be a Z-stacked structure as shown in FIG. 6 or may have a structure in which a plurality of separators are sequentially stacked together with positive and negative electrode plates as shown in FIG. 21.

As active material for the positive electrode, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}CO_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

Active material for the negative electrode may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0<x≤2), a Si-based alloy, or a combination thereof.

The silicon-carbon composite may be a composite of silicon and amorphous carbon. According to some embodiments, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99.5 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

As described above, the electrode assembly 20 may include the positive electrode plate 23, the separator 21, and the negative electrode plate 24, and in particular, may include a bottom fusion folding portion 21a at a lower portion thereof. The bottom fusion folding portion 21a may be a portion formed by heat-fusing and then folding a lower edge of the separator 21. The bottom fusion folding portion 21a may be in contact with the bottom portion 11c of the battery can 11 and may serve, for example, as a bottom retainer for supporting the electrode assembly.

The bottom fusion folding portion 21a may be a portion of the electrode assembly 20 and may provide a supporting force in a state of being in close contact with the bottom portion 11c of the battery can 11. That is, the bottom fusion folding portion 21a may support the electrode assembly 20 to prevent or substantially prevent the electrode assembly 20 from sagging downward due to a dead load thereof, being biased to one side, or coming into contact with the bottom portion 11c. When the electrode assembly 20 comes into contact with the bottom portion 11c, an electrical short may occur between the positive or negative electrode plate and the bottom portion 11c. In this way, the bottom fusion folding portion 21a may perform a function of stably supporting the electrode assembly as well as providing an electrical insulation function.

The bottom fusion folding portion 21a may be a portion formed by fusing the separator at a lower side of the electrode assembly 20 and then folding the separator to one side. In this way, because the separator 21 itself is fused and folded, the positive or negative electrode plate between the separators 21 cannot be separated downward from the separator. In other words, the secondary battery 10 may have a "closed structure" in which the positive electrode plate or the negative electrode plate cannot be separated to the outside of the separator.

As a result, the secondary battery according to some embodiments may have a structure in which an edge of the separator 21 is fused and then folded to stably fix positions of the positive and negative electrode plates between the separators. The folded separator may physically restrict the movement of electrode plates (e.g., positive and negative electrode plates) to stably maintain an alignment state, thereby improving the stability and reliability of the secondary battery 10. In particular, even when a bottom retainer is not applied separately as a separate component, the electrode assembly 20 can be stably supported, and an electrical short can be prevented.

As shown in FIG. 2, a plurality of folding maintenance tapes 26 may be attached to a lower portion of the electrode assembly 20. The folding maintenance tapes 26 may prevent the bottom fusion folding portion 21a from being unfolded again. An adhesion tape 25 may be attached to each of an upper portion and two side portions of the electrode assembly 20. The adhesion tape 25 may maintain a close contact state of the electrode assembly 20.

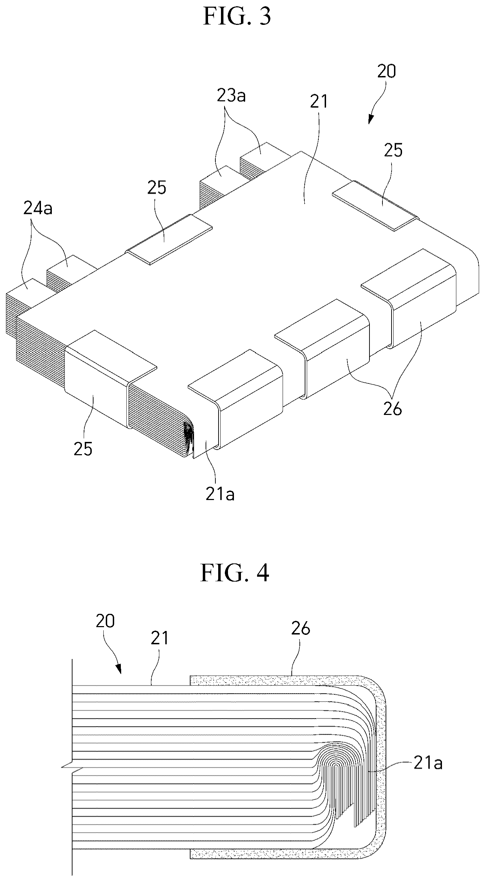

FIG. 3 is a view illustrating an electrode assembly 20 applied to a secondary battery 10 according to some embodiments of the present invention. FIG. 4 is an enlarged view illustrating a fusion folding portion of FIG. 3, according to some embodiments of the present invention.

As shown, a positive electrode tab 23a and a negative electrode tab 24a may be disposed at two upper sides of the electrode assembly 20. The positive electrode tab 23a may be a portion extending from a positive electrode plate 23, and the negative electrode tab 24a may be a portion extending from a negative electrode plate 24. The positive electrode tab 23a and the negative electrode tab 24a may be electrically connected to a cap assembly 13 through a current collector 15.

An adhesion tape 25 may be attached to each of two side portions and an upper portion of the electrode assembly 20. The adhesion tape 25 may be a stacking maintenance portion that is attached to the electrode assembly 20 and maintains a stacked state of the electrode assembly 20. The adhesion tape 25 as the stacking maintenance portion may maintain an alignment state of the electrode assembly in a state of being attached to the electrode assembly. Through the adhesion tape 25 and the folding maintenance tape 26, the electrode assembly 20 can be stably maintained in a compact state without being unfolded.

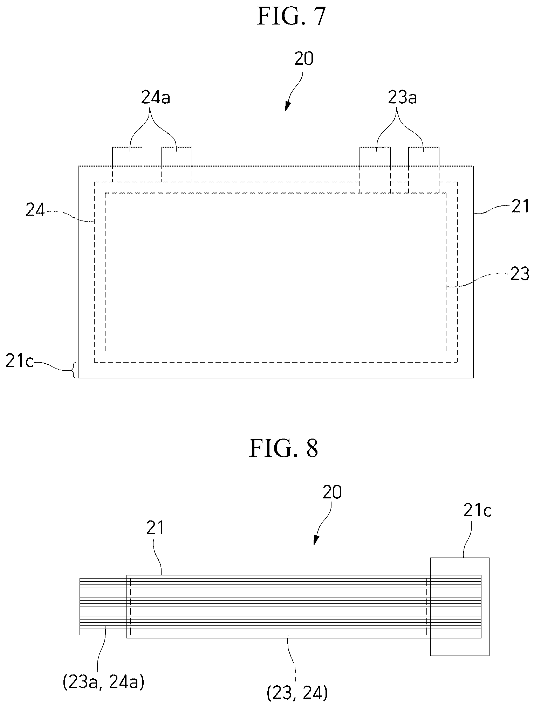

In addition, a lower portion of the separator 21 that accommodates the positive electrode plate 23 and the negative electrode plate 24 may be folded in a fused state and then maintained in a folded state through a plurality of folding maintenance tapes 26. One of the reasons why the separator 21 may be fused and folded is that an area of the separator 21 is relatively greater than that of the positive and negative electrode plates as shown in FIG. 8.

A bottom fusion folding portion 21a may be a portion in which a fusion target portion 21c of FIG. 8 is pressed, heated, fused, and then folded. Because the fusion target portion 21c is fused and folded, there may be no concern that the positive or negative electrode plate inside deviate downward from the separator. In other words, a vertical alignment of the positive and negative electrode plates may be maintained.

A folding line of the bottom fusion folding portion 21a may be parallel to an end line of the positive or negative electrode plate. That is, the folding line may be parallel to a lower edge line of the positive or negative electrode plate having a quadrangular shape.

The folding maintenance tape 26 may serve as a folding maintenance portion that maintains a folded state of the bottom fusion folding portions 21a. The folding maintenance tapes 26 as the folding maintenance portions may be attached and fixed to the electrode assembly while covering the bottom fusion folding portions 21a. The bottom fusion folding portion 21a may be maintained in a folded state by the folding maintenance tape 26. The folding maintenance tapes 26 may also serve as stacking maintenance portions that maintain a stacked state of the electrode assembly 20.

The separator 21 may have a Z-folding structure that is repeatedly folded in a Z shape as shown in FIG. 6. In some examples, as shown in FIG. 21, the separator 21 may have a form of a single sheet having a rectangular shape. Single sheets of the separators 21 may be superimposed and stacked.

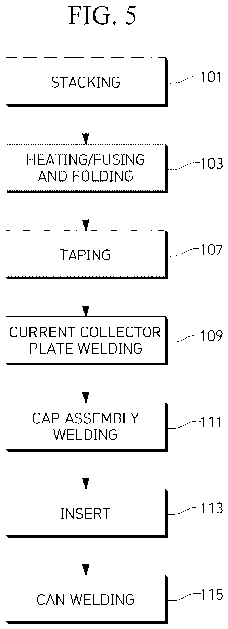

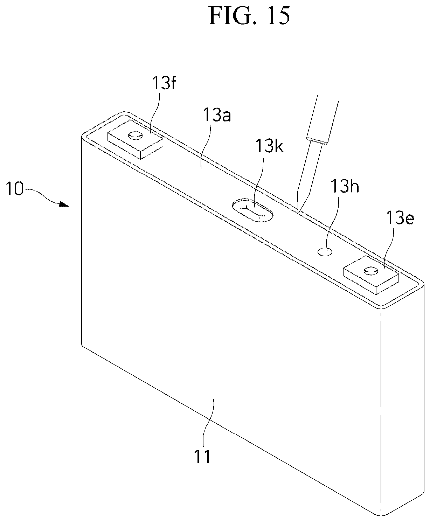

FIG. 5 is a flowchart for describing a method of manufacturing a secondary battery according to some embodiments of the present invention. FIGS. 6 to 15 are views sequentially illustrating the method of manufacturing a secondary battery according to some embodiments of the present invention.

As described above, the method of manufacturing a secondary battery according to some embodiments of the present invention may include stacking operation 101, heating, fusing, and folding operation 103, taping operation 107, current collector welding operation 109, cap assembly welding operation 111, insert operation 113, and can welding operation 115.

Stacking operation 101 may be a process of repeatedly stacking a positive electrode plate 23, a separator 21, and a negative electrode plate 24 to constitute an electrode assembly. For example, as shown in FIG. 6, the positive and negative electrode plates 23 and 24 may be alternately inserted and stacked between sheets of the separators 21 that are repeatedly bent. As described, the separator 21 may be a separated quadrangular plate-shaped separator other than the Z-folding type separator of FIG. 6.

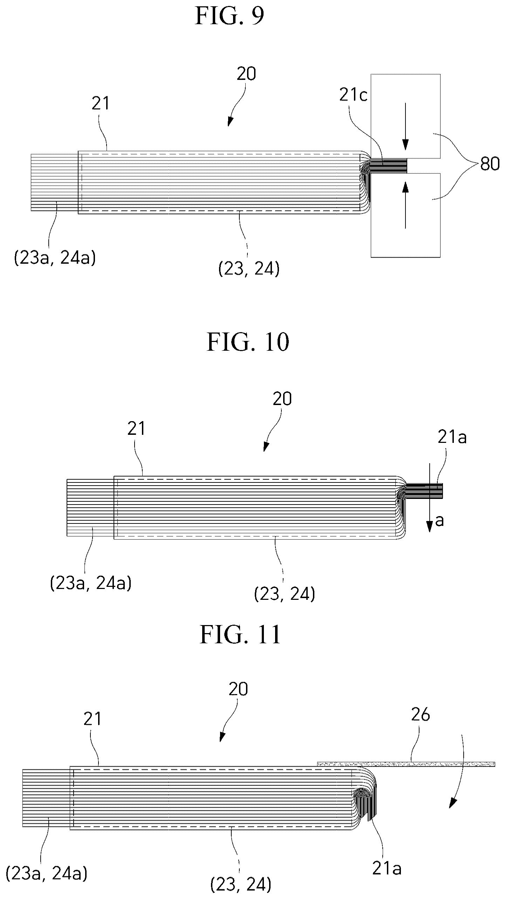

FIG. 7 is a plan view of a stack on which stacking operation 101 is completed. FIG. 8 is a side view of the stack. As shown, it can be seen that an area of the separator 21 is greater than an area of the negative electrode plate 24. Accordingly, a remaining area (hereinafter referred to as "separator margin") may be formed between an end line of the separator 21 and an end line of the negative electrode plate 24. In particular, the separator margin at a lower side of the stack may be a fusion target portion 21c and may be fused by a fusion head 80 as shown in FIG. 9.

Heating, fusing, and folding operation 103 may be a process of forming a bottom fusion folding portion 21a by heating, fusing, and folding a lower edge of the electrode assembly, that is, the fusion target portion 21c.

In order to perform heating, fusing, and folding operation 103, first, as shown in FIG. 9, the fusion target portion 21c may be heated and pressed using the fusion head 80. A heating heater may be embedded in the fusion head 80. When the fusion target portion 21c is pressed using the fusion head 80, the fusion target portion 21c may be melted and fused. FIG. 10 illustrates a state in which the fusion target portion 21c of the separator is fused.

If such a fusion process is completed, a fusion portion may be folded in a direction of arrow a of FIG. 10 so that the fusion portion may be allowed to cover a lower thickness surface of the stack. The bottom fusion folding portion 21a may be formed by folding the fusion portion in the direction of arrow a. However, the bottom fusion folding portion 21a may not maintain a folded state without any change, but may have a spring-back tendency to be unfolded again.

Subsequent taping operation 107 may be a process of preventing the bottom fusion folding portion 21a from being unfolded again. Taping operation 107 may be a process of maintaining a folded state of the bottom fusion folding portion 21a using a folding maintenance tape 26 after the completion of heating, fusing, and folding operation 103.

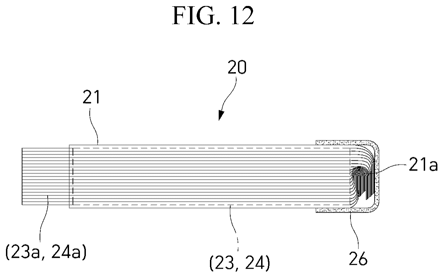

FIGS. 11 and 12 illustrate a state in which the bottom fusion folding portion 21a is wound and fixed with the folding maintenance tape 26. The folding maintenance tape 26 itself may be an adhesion tape like an adhesion tape 25. In a state in which the folding maintenance tape 26 covers the bottom fusion folding portion 21a, two end portions of the folding maintenance tape 26 may be attached and fixed to two surfaces of the electrode assembly 20. FIG. 12 illustrates a state in which the bottom fusion folding portion 21a is supported by the folding maintenance tape 26.

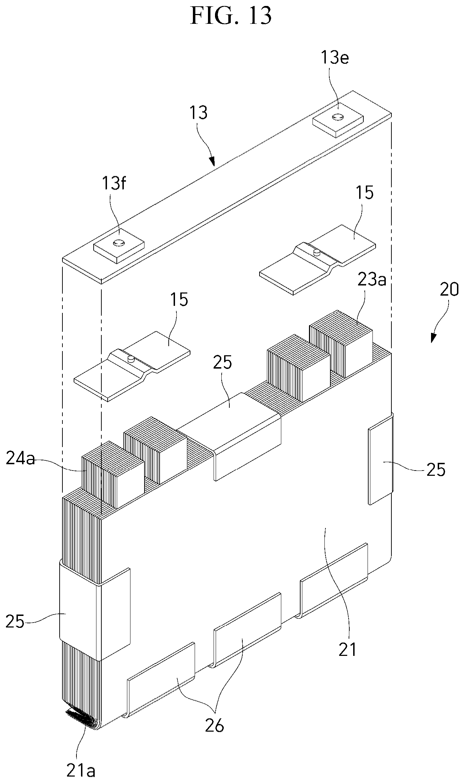

Current collector welding operation 109 may be a process of bringing a current collector 15 into close contact with the positive electrode tab 23a and the negative electrode tab 24a to weld the current collector 15 as shown in FIG. 13. The welding performed on the current collector may be via laser welding, or any other suitable welding process.

Cap assembly welding operation 111 may be a process of welding a cap assembly 13 to the electrode assembly 20 to which the current collector 15 is welded. The current collector 15 at one side may be welded to a first terminal 13e, and the current collector 15 at the other side may be welded to a second terminal 13f.

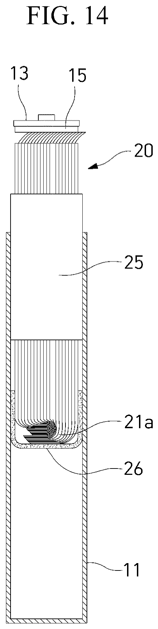

After the cap assembly welding operation 111 is completed, insert operation 113 may be performed. Insert operation 113 may be a process of inserting the electrode assembly 20, to which the cap assembly 13 is welded, into a battery can 11, as shown in FIG. 14. When insert operation 113 is completed, the folding maintenance tape 26 and the bottom fusion folding portion 21a may be in contact with a bottom portion 11c of the battery can. In addition, a cap plate 13a of the cap assembly may be in contact with an upper opening of the battery can 11.

Can welding operation 115 may be a process of fixing the cap assembly to the battery can after insert operation 113 is completed. That is, the cap plate 13a may be welded to an upper end of the battery can 11.

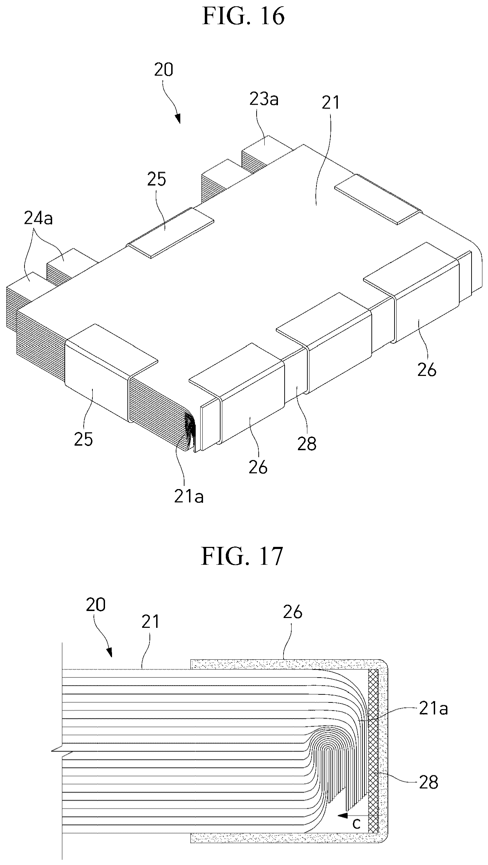

FIG. 16 is a view illustrating a modified example of an electrode assembly 20 applicable to a secondary battery according to some embodiments of the present invention. FIG. 17 is an enlarged view illustrating a bottom fusion folding portion 21a shown in FIG. 16 according to some embodiments of the present invention.

As shown, a press plate 28 may be further applied between the bottom fusion folding portion 21a and a folding maintenance tape 26. The press plate 28 may have a rectangular plate shape and may have properties that do not allow deformation caused by an external force. In addition, the press plate 28 may be made of a synthetic resin. The press plate 28 may be supported in a direction of arrow c by the folding maintenance tape 26 and may press and support the bottom fusion folding portion 21a. By applying the press plate 28, even a portion of the bottom fusion folding portion 21a that is not supported by the folding maintenance tape 26 can be pressed with a uniform pressure and supported.

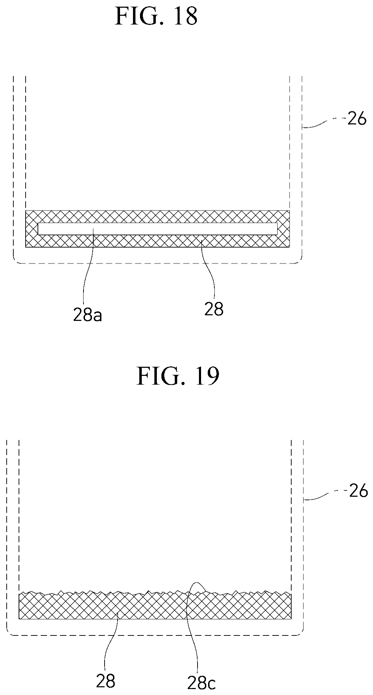

FIGS. 18 and 19 are cross-sectional views illustrating other examples of the press plate 28 shown in FIG. 17 according to some embodiments of the present invention.

As shown in FIG. 18, a closed space 28a may be formed inside the press plate 28. By applying the closed space 28a, a weight of the press plate 28 can be reduced, and also a flow area of heat transferred from an electrode assembly 20 to a bottom portion 11c of a battery can 11 can be reduced.

In addition, as shown in FIG. 19, a concavo-concave portion 28c may be formed on the press plate 28. The concavo-concave portion 28c may prevent or reduce slippage of the press plate 28 with respect to a bottom fusion folding portion 21a. That is, the concavo-concave portion 28c may prevent the press plate 28 from moving slightly forward, backward, leftward, and rightward.

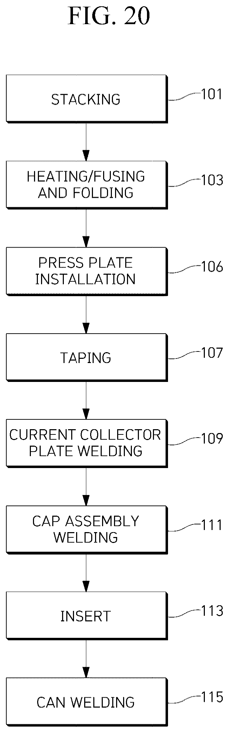

FIG. 20 is a flowchart illustrating another example of a method of manufacturing a secondary battery according to some embodiments of the present invention. Reference symbols identical to those shown in FIG. 5 indicate the same manufacturing process, and the description thereof may not be repeated.

As shown in FIG. 20, press plate installation operation 106 may be performed between heating, fusing, and folding operation 103 and taping operation 107. Press plate installation operation 106 may be a process of installing a press plate 28 on a bottom fusion folding portion 21a. When a folding maintenance tape 26 is taped in a state in which the press plate 28 is located on the bottom fusion folding portion 21a, the bottom fusion folding portion 21a may be entirely pressed with an even pressure by the press plate 28.

FIGS. 21 and 22 are views for describing still another example of a method of manufacturing a secondary battery according to some embodiments of the present invention.

As shown in FIG. 21, separators 21 constituting an electrode assembly 20 may be provided (e.g., applied) as single sheets. That is, positive electrode plates 23 and negative electrode plates 24 may be alternately inserted between the single sheets of the separators 21. As in a Z-stack-type electrode assembly, a width of the separator 21 may be greater than that of the positive electrode plate 23 and the negative electrode plate 24. FIG. 22 is a plan view of the electrode assembly 20 formed by stacking a plurality of separators 21, a plurality of positive electrode plates 23, and a plurality of negative electrode plates 24. As shown, a separator margin may be provided outside the negative electrode plate 24.

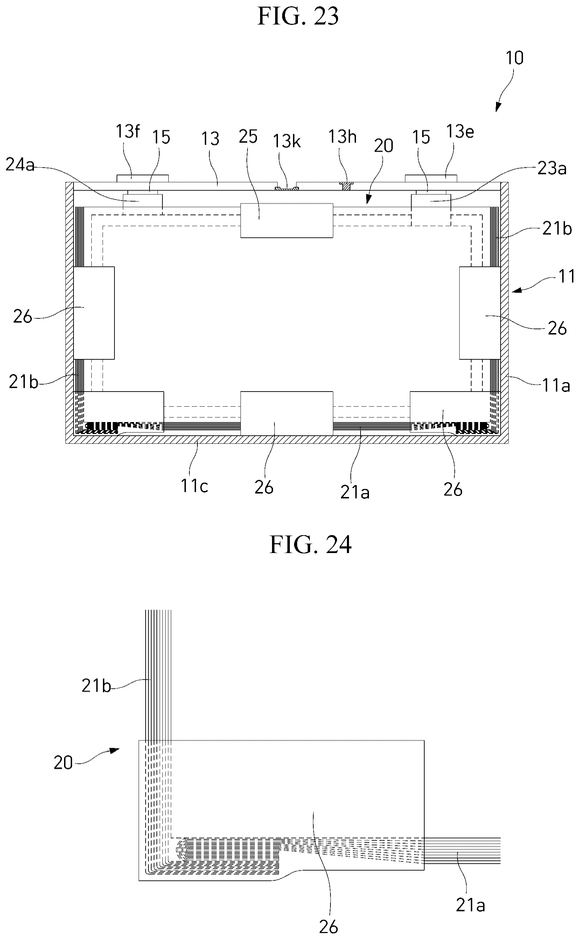

FIG. 23 is a cross-sectional view illustrating another example of a secondary battery 10 according to some embodiments of the present invention. FIG. 24 is a view for describing a method of taping a bottom fusion folding portion 21a and side fusion folding portions 21b shown in FIG. 23 according to some embodiments of the present invention.

As shown in FIG. 23, the side fusion folding portion 21b may be formed at two side portions of the electrode assembly 20. The side fusion folding portion 21b may be a portion formed by heating, fusing, and folding a separator margin located at two side portions of the electrode assembly 20. A method of forming the side fusion folding portion 21b is the same as a method of forming the bottom fusion folding portion 21a. By applying the side fusion folding portion 21b in this way, a positive electrode plate 23 and a negative electrode plate 24 inserted between the separator 21 cannot move laterally.

The side fusion folding portions 21b may be formed by heat-fusing and then folding two side portions of the separator and may be in contact with a sidewall portion 11a of the battery can 11. That is, the side fusion folding portions 21b may be supported by the sidewall portion 11a. In addition, the side fusion folding portion 21b may be maintained in a folded state by a folding maintenance tape 26, which is a folding maintenance portion.

The folding maintenance portions may maintain a folded state of the bottom fusion folding portion 21a and the side fusion folding portions 21b and may include the folding maintenance tapes 26. The folding maintenance tapes 26 may be attached to the electrode assembly while covering the bottom fusion folding portion and the side fusion folding portions. In addition, the folding maintenance tapes 26 attached to lower left and right corners of the electrode assembly 20 may simultaneously fix (e.g., grip and fix the relative position of) the bottom fusion folding portion 21a and the side fusion folding portions 21b. In addition, a press plate 28 may also be applied to the side fusion folding portion 21b.

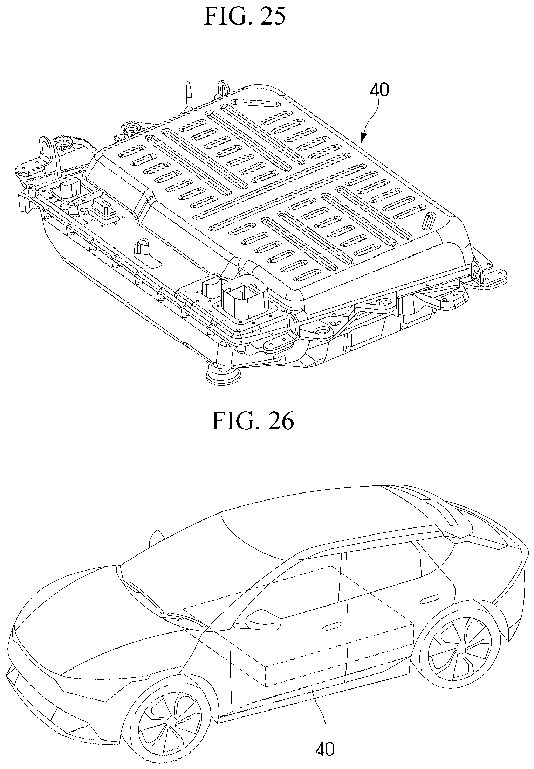

FIG. 25 is a perspective view of a secondary battery pack 40 in which a secondary battery is embedded according to some embodiments of the present invention.

The secondary battery pack 40 may be manufactured by embedding a plurality of secondary battery modules in a pack housing designed to be mounted on an actual product. The pack housing may include fastening portions and electricity leading portions which are necessary for being mounted on a product. In FIG. 25, for convenience of illustration, related elements for electrically connecting the secondary battery, such as busbars, cooling units, and external terminals, are omitted. The secondary battery pack may be mounted on a vehicle. The vehicle may be, for example, an electric vehicle, a hybrid vehicle, or a plug-in hybrid vehicle. The vehicle may include a four-wheel drive or two-wheel drive vehicle.

FIG. 26 is a schematic view of a vehicle to which the secondary battery pack of FIG. 25 is applied according to some embodiments of the present invention.

FIG. 26 illustrates a secondary battery pack 40 according to some embodiments of the present invention mounted on a lower body of a vehicle. The vehicle operates by receiving power from the secondary battery pack 40 according to some embodiments of the present invention.

In a method of manufacturing a secondary battery of the present invention implemented as described above, an edge of a separator that accommodates an electrode plate is fused along an end line of the electrode plate and then folded, thereby maintain an alignment state of the electrode plate inside the separator.

In addition, because a heat-fused portion of a separator itself performs a function of a retainer, a stable attitude of an electrode assembly can be maintained in a battery can without use of a separate retainer.

Although the present invention has been described above with respect to embodiments thereof, the present invention is not limited thereto. Various modifications and variations can be made thereto by those skilled in the art within the spirit of the present invention as defined by the appended claims and their equivalents.

## Claims

1. A secondary battery (10) comprising:
a battery can (11) having a bottom portion (11c) and sidewall portions (11a) and open to an outside through an opening;
an electrode assembly (20) having a stack structure of a positive electrode plate (23), a separator (21), and a negative electrode plate (24) and mounted inside the battery can (11); and
a cap assembly (13) fixed to the opening of the battery can (11) and connected to the electrode assembly (20),
wherein a lower portion of the electrode assembly (20) comprises a bottom fusion folding portion (21a), formed by heat-fusing and folding an edge of the separator (21), is in contact with the bottom portion (11c) of the battery can (11), and supports the electrode assembly (20).

2. The secondary battery (10) as claimed in claim 1, wherein a folding line of the bottom fusion folding portion (21a) is parallel to an end line of the positive electrode plate (23) or the negative electrode plate (24).

3. The secondary battery (10) as claimed in claim 1 or 2, wherein the electrode assembly (20) further comprises a folding maintenance portion configured to maintain a folded state of the bottom fusion folding portion (21a).

4. The secondary battery (10) as claimed in claim 3, wherein the folding maintenance portion comprises a folding maintenance tape (26) attached to the electrode assembly (20) and covering the bottom fusion folding portion (21a).

5. The secondary battery (10) as claimed in any of the preceding claims, wherein the separator (21) has a Z-folding structure repeatedly folded in a Z shape.

6. The secondary battery (10) as claimed in any of the preceding claims, wherein a stacking maintenance portion is further provided at each of two side portions of the electrode assembly (20) to maintain an alignment state of the electrode assembly (20).

7. The secondary battery (10) as claimed in claim 6, wherein the stacking maintenance portion comprises an adhesion tape (25) attached to the two side portions of the electrode assembly (20).

8. The secondary battery (10) as claimed in claim 4, wherein a press plate (28) is further provided between the bottom fusion folding portion (21a) and the folding maintenance tape (26) to press and support the bottom fusion folding portion (21a).

9. The secondary battery (10) as claimed in claim 8, wherein a closed space (28a) is formed inside the press plate (28).

10. The secondary battery (10) as claimed in any of the preceding claims, wherein side fusion folding portions (21b) that are in contact with the sidewall portions (11a) of the battery can (11), and formed by heat-fusing and folding two side portions of the separator (21), are further formed at two side portions of the electrode assembly (20).

11. The secondary battery (10) as claimed in claim 10, wherein the electrode assembly (20) further comprises a folding maintenance portion configured to maintain a folded state of the bottom fusion folding portion (21a) and the side fusion folding portions (21b).

12. The secondary battery (10) as claimed in claim 11, wherein the folding maintenance portion comprises a folding maintenance tape (26) attached to the electrode assembly (20) and covering the bottom fusion folding portion (21a) and the side fusion folding portion (21b),

13. A method of manufacturing a secondary battery (10), the method comprising:
a stacking operation (101) of repeatedly stacking a positive electrode plate (23), a separator (21), and a negative electrode plate (24) to form an electrode assembly (20);
a heating, fusing, and folding operation (103) of heating, fusing, and folding the separator (21) at a lower edge of the electrode assembly (20) to form a bottom fusion folding portion (21a);
a cap assembly welding operation (111) of connecting a cap assembly (13) to the electrode assembly (20) on which the heating, fusing, and folding operation (103) has been completed;
an insert operation (113) of inserting the electrode assembly, to which the cap assembly (13) is welded, into a battery can (11); and
a can welding operation (115) of fixing the cap assembly (13) to the battery can (11) after the insert operation (113) is completed.

14. The method as claimed in claim 13, further comprising, after the heating, fusing, and folding operation (103) is completed, a taping operation (107) of maintaining a folded state of the bottom fusion folding portion (21a) using a tape.

15. The method as claimed in claim 14, further comprising a press plate installation operation (106) of mounting a press plate (28), which presses the bottom fusion folding portion (21a), on the bottom fusion folding portion (21a),
wherein the press plate installation operation (106) is a process performed between the heating, fusing, and folding operation (103) and the taping operation (107).
